# EUROPÄISCHE PATENTSCHRIFT

(11) **EP 2 552 641 B1**
(45) Veröffentlichungstag und Bekanntmachung des Hinweises auf die Patenterteilung: **03.12.2014**
(21) Anmeldenummer: 11705550.9
(22) Anmeldetag: 24.02.2011
(51) Int. Cl.: B23Q 17/00, B23Q 17/24

(54) **WERKZEUGMASCHINE MIT DREHÜBERTRAGER FÜR DATEN**
MACHINE TOOL HAVING A ROTARY TRANSMITTER FOR DATA
MACHINE-OUTIL AVEC TRANSMETTEUR ROTATIF POUR DES DONNÉES

(30) Priorität: 26.03.2010 DE 102010003338
(43) Veröffentlichungstag der Anmeldung: 06.02.2013
(73) Patentinhaber: Komet Group GmbH, 74354 Besigheim (DE)
(72) Erfinder: FRONIUS, Jürgen, 74399 Walheim/Neckar (DE); GRAF, Heiko, 70839 Gerlingen (DE); HASSELKUSS, Ewald, 70734 Fellbach (DE)
(74) Vertreter: Wolf, Eckhard
(86) Internationale Anmeldenummer: PCT/EP2011/052709
(87) Internationale Veröffentlichungsnummer: WO 2011/117038

(56) Entgegenhaltungen:
- EP-A1- 1 762 331
- EP-B1- 1 255 627
- DE-A1- 19 843 575
- DE-A1-102005 011 197
- DE-A1-102007 048 961

## Beschreibung

Die Erfindung betrifft eine Werkzeugmaschine mit einem Maschinengestell, mit einer am Maschinengestell drehbar angeordneten, motorisch angetriebenen Maschinenspindel, mit mindestens einem an der Maschinenspindel einwechselbaren Bearbeitungskopf, der ein mit einer Aufnahme der Maschinenspindel kompatibles Kupplungselement aufweist, und mit einem Drehübertrager für die Datenübertragung zwischen einem gestellfesten Stator und einem spindelfesten Rotor.

Eine derartige Werkzeugmaschine ist aus der DE 10 2005 011 197 A1 bekannt.

Werkzeugmaschinen dieser Art werden zu vielfältigen fertigungstechnischen und messtechnischen Aufgaben eingesetzt. Üblicherweise werden mit den verschiedenen einwechselbaren Bearbeitungsköpfen spanende Bearbeitungen von metallischen Werkstoffen, Kunststoffen oder Holz durchgeführt. Für nicht rotationssymmetrische Werkstücke besteht die Möglichkeit, eine der Drehmaschine ähnliche Bearbeitung mit drehender Spindel auszuführen, die durch die Maschinenkinematik getragen zusätzliche translatorische Freiheitsgrade zwischen Werkstück und Bearbeitungskopf zulässt. Zu diesem Zweck werden beispielsweise auch Plandrehköpfe eingesetzt. Plandrehköpfe sind rotationsfähige Werkzeugköpfe, die es ermöglichen, eine Schneide radial zur Rotationsachse der Spindel zu verlagern. Verwirklicht wird dies beispielsweise in Werkzeugmaschinen mit Sonderkomponenten, wie beispielsweise Spindeln mit zweistufigen Planetengetrieben und zusätzlichem externem Antrieb, der es ermöglicht, bei rotierender Spindel die Antriebswelle für den Planschieber zu verstellen. In gängigen Spindel- und Werkzeugschnittstellen wird zu diesem Zweck eine elektrische Übertragungsschnittstelle mit einem Drehübertrager ohne Beeinträchtigung der Funktionalität der Mechanik integriert, die einen Bearbeitungskopfwechsel ermöglicht. Grundsätzlich kann die Übertragungsschnittstelle in Form eines elektrischen berührungslosen und/oder kontaktierenden Drehübertragers am kopfseitigen Ende oder am rückwärtigen Ende der Spindel angeordnet werden.

Bekannte Werkzeugmaschinen dieser Art bedürfen je nach Komplexität der durchzuführenden Bearbeitungsschritte und des mechatronischen Aufbaus eines erheblichen Konstruktions- und Verdrahtungsaufwands, der auch bei gleichartigen Aufgaben herstellerspezifische Unterschiede aufweist.

Ausgehend hiervon liegt der Erfindung die Aufgabe zugrunde, Werkzeugmaschinen der eingangs angegebenen Art dahingehend zu verbessern, dass der Konstruktions- und Verdrahtungsaufwand vereinfacht und herstellerübergreifend standardisiert werden kann.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung geht von dem Gedanken aus, dass die Maschinenspindel und die Bearbeitungsköpfe von Werkzeugmaschinen eine Vielzahl von aktorischen und sensorischen Funktionsmodulen aufweisen, die durch ein spindelseitiges und ein kopfseitiges standardisiertes Bussystem in einfacher Weise über eine zentrale Maschinensteuerung angesteuert werden können. Um dies zu ermöglichen, wird gemäß der Erfindung vorgeschlagen, dass die Maschinenspindel eine Mehrzahl von spindelseitigen Funktionsmodulen sowie ein einen Bestandteil eines Spindelbus bildendes Leitungssystem aufweist, an das die spindelseitigen Funktionsmodule in Form von Teilnehmerstationen oder Busteilnehmern des Spindelbus angeschlossen sind, wobei der Spindelbus zusätzlich über die Drehübertragungsstrecke mit einem gestellfesten Feldbus kommuniziert. Wegen der häufig hohen Spindeldrehzahlen werden die Daten zweckmäßig berührungslos von der Statorseite zur Rotorseite oder umgekehrt übertragen, beispielsweise über eine induktive, kapazitive oder optoelektronische Übertragungsstrecke oder per Funk.

Die Drehübertragungsstrecke erfordert eine Anpassung der Übertragungsprotokolle, so dass der Spindelbus zweckmäßig eine mit dem Feldbus vorzugsweise über einen Feldbusadapter kommunizierenden rotorfesten Protokollkonverter aufweist. Ein Protokollkonverter konvertiert dabei Protokolle zwischen protokollmäßig unterschiedlichen Bussystemen. Protokollkonverter können Software- oder Hardwareprodukte sein oder auch beliebige Kombinationen von beiden.

Da an der Maschinenspindel eine Vielzahl unterschiedlicher Bearbeitungsköpfe einwechselbar sind und die Bearbeitungsköpfe die unterschiedlichsten Aufgaben haben können, weisen die Bearbeitungsköpfe eine Mehrzahl unterschiedlicher kopfseitiger Funktionsmodule auf. Zweckmäßig wird auch im Bearbeitungskopf ein einen Bestandteil eines Kopfbus bildendes Leitungssystem vorgesehen, an das die kopfseitigen Funktionsmodule in Form von Busteilnehmern des Kopfbus angeschlossen sind. Der Kopfbus kommuniziert dabei über eine Trennstelle mit dem Spindelbus und damit auch mit dem gestellfesten Feldbus. In der Regel enthalten sowohl die Maschinenspindel als auch der Bearbeitungskopf sensorische und/oder aktorische Funktionsmodule.

Gemäß einer bevorzugten Ausgestaltung der Erfindung weist die Maschinenspindel mindestens ein spindelseitiges Funktionsmodul aus der Gruppe Temperatursensor, Schwingungssensor, Kraftsensor, Drucksensor, Feuchtigkeitssensor, Sperrluftsensor, Schmierzustandssensor, Drehzahlsensor, Beschleunigungssensor als Messglied und/oder aus der Gruppe Sperrluftventil, Stellantrieb, pneumatisches oder hydraulisches Magnetventil, Schmiermitteldosierer, Kühlmitteldosierer, Spindelmotor als Aktor auf.

Wenn Spindelbus und Kopfbus miteinander kompatibel sind, können sie an der Trennstelle galvanisch verbunden werden. Bei unterschiedlichen Bussystemen müssen entsprechende Protokollkonverter eingesetzt werden.

Eine bevorzugte Ausgestaltung der Erfindung sieht vor, dass der Bearbeitungskopf mindestens ein kopfseitiges Funktionsmodul aus der Gruppe Linear- oder Drehschieber, Stellantrieb, Antriebsmotor, Drehgeber, Positionssensor, Dosierer, Heizelement, Laser, Temperatursensor, Beschleunigungssensor aufweist. Der Stellantrieb und der Antriebsmotor sind dabei zweckmäßig für die Schieberbetätigung vorgesehen, während Drehgeber und Positionssensor für die Positionsmessung innerhalb eines Schiebersystems vorgesehen sind.

Für den Reinigungs-, Schweiß- und Lötvorgang kommen dagegen bevorzugt die Dosierer sowie Heiz- und Kühlmodule in Betracht.

Die kopfseitigen Funktionsmodule sind bevorzugt mit einem Werkzeug aus der Gruppe Schneidwerkzeug, Bohrwerkzeug, Fräswerkzeug, Reibwerkzeug, Schweißwerkzeug, Lötwerkzeug, Härtungswerkzeug, Beschichtungswerkzeug, Beschriftungswerkzeug, Reinigungswerkzeug, Messwerkzeug, Kamera ausgestattet.

Als Spindelbus und/oder Kopfbus kommt vorzugsweise ein standardisierter Feldbus, vorzugsweise ein CAN-Bus oder LIN-Bus in Betracht.

Eine weitere bevorzugte Ausgestaltung der Erfindung sieht vor, dass die Drehübertragungsstrecke eine Sende- und Empfangseinheit für die berührungslose, bidirektionale Datenübertragung aufweist.

Weiter kann die Drehübertragungsstrecke zusätzlich eine Sende- und Empfangseinheit für die berührungslose oder galvanische Energieübertragung aufweisen. Der Spindelbus und der Kopfbus können über ein gestellfestes Bussystem mit einer zentralen Maschinensteuerung verbunden sein.

Im Folgenden wird die Erfindung anhand eines in der Zeichnung in schematischer Weise dargestellten Ausführungsbeispiels näher erläutert. Es zeigen
- Fig. 1: ein Schema einer Spindel- und Kopfsteuerung einer Werkzeugmaschine für die Werkstückbearbeitung;
- Fig. 2: ein Schema eines gegenüber Fig. 1 abgewandelten Ausführungsbeispiels der Spindel- und Kopfsteuerung einer Werkzeugmaschine für die Werkstückbearbeitung.

Die in der Zeichnung schematisch dargestellten Maschinenspindeln 10 sind Bestandteil einer Werkzeugmaschine zur Bearbeitung von Werkstücken, insbesondere zur Komplettbearbeitung, das zusätzlich ein in der Zeichnung nicht dargestelltes Werkzeugmagazin sowie eine Handhabungsvorrichtung für die Maschinenwerkzeuge aufweist. Die Maschinenspindel 10 ist innerhalb der Werkzeugmaschine in einem Maschinengestell angeordnet, an welchem sie beispielsweise an einem Kreuztisch in drei Achsen X, Y, Z verschiebbar sowie drehbar angeordnet oder motorisch angetrieben ist. An einer mechanischen und elektrischen Trennstelle 14 der Maschinenspindel 10 ist ein Bearbeitungskopf 12 einwechselbar, der ein mit einer Aufnahme der Maschinenspindel kompatibles Kupplungselement aufweist. Weiter ist ein Drehübertrager 16 für die Datenübertragung zwischen einem gestellfesten Stator 18 und einem spindelfesten Rotor 20 vorgesehen.

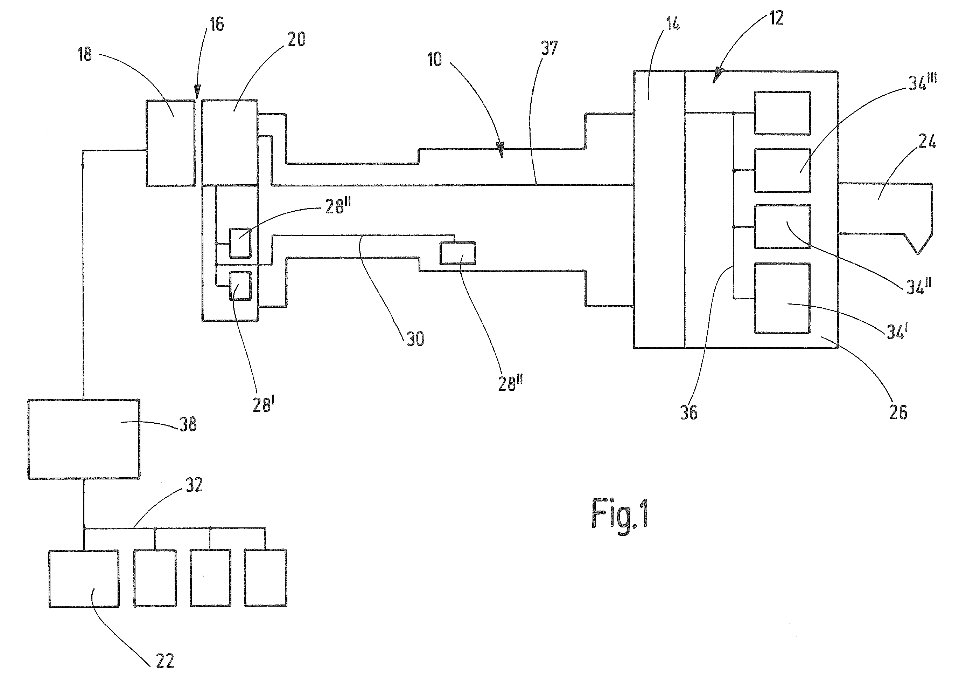

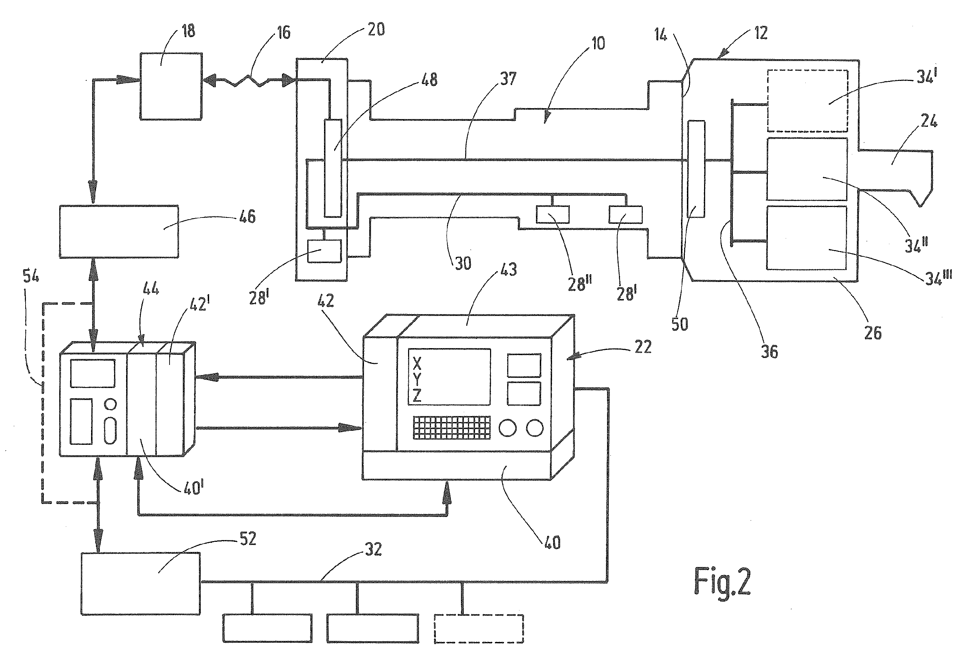

Weiter umfasst die Werkzeugmaschine eine zentrale Maschinensteuerung 22 (NC-Steuerung), mit der u. a. die Bewegung des Bearbeitungswerkzeugs 24 im Bearbeitungsraum der Werkzeugmaschine gesteuert wird. Durch die Verwendung dreier senkrecht aufeinanderstehender Achsen X, Y und Z kann jeder Punkt im Bearbeitungsraum erreicht werden. Zusätzlich ist bei den in Fig. 1 und 2 gezeigten Ausführungsbeispielen ein Bearbeitungskopf 12 mit einem abhängig von den Bewegungsachsen der Spindel 10 verschiebbaren Planschieber 26 vorgesehen, der eine zusätzliche, unabhängig ansteuerbare U-Achse bildet. Grundsätzlich lassen sich anstelle des in der Zeichnung dargestellten Planschiebers 26 als Bearbeitungskopf auch andersartige Werkzeuge, wie Schneidwerkzeug, Bohrwerkzeug, Fräswerkzeug, Reibwerkzeug, Schweißwerkzeug, Lötwerkzeug, Härtungswerkzeug, Beschichtungswerkzeug, Beschriftungswerkzeug, Laser, Reinigungswerkzeug, Messwerkzeug und dergleichen einsetzen.

Eine Besonderheit der erfindungsgemäßen Spindel- und Kopfsteuerung der Werkzeugmaschine besteht darin, dass die Maschinenspindel 10 eine Mehrzahl von spindelseitigen Funktionsmodulen 28', 28", 28"' sowie ein Leitungssystem aufweist, das einen Bestandteil eines Spindelbus 30 bildet. Die spindelseitigen Funktionsmodule 28', 28", 28"' sind unter Bildung von Teilnehmerstationen an den Spindelbus 30 angeschlossen. Der Spindelbus kommuniziert seinerseits über die Drehübertragungsstrecke 16 mit einem gestellfesten Feldbus 32. Die in den beiden Ausführungsbeispielen gezeigten Funktionsmodule 28', 28", 28"' können sowohl als Sensoren als auch als Aktoren ausgebildet sein. Zur Überwachung der Spindel 10 sind eine Vielzahl solcher Funktionsmodule vorgesehen, die zum überwiegenden Teil über die zentrale Maschinensteuerung 22 überwacht, gesteuert und geregelt werden können. Ohne auf den internen Aufbau der Maschinenspindel 10 im Einzelnen einzugehen, kommen hierfür spindelseitige Funktionsmodule 28', 28", 28'" aus der Gruppe Temperatursensor, Schwingungssensor, Kraftsensor, Drucksensor, Feuchtigkeitssensor, Sperrluftsensor, Schmierzustandssensor, Drehzahlsensor, Beschleunigungssensor, Relativbeschleunigungssensor als Messglieder und/oder aus der Gruppe Sperrluftventil, Stellantrieb, pneumatisches oder hydraulisches Magnetventil, Schmiermitteldosierer, Kühlmitteldosierer, Spindelmotor, Antriebe, wie z. B. Rotations-, Stell- oder Lineardirektantriebe, Wandler elektrischer Größen als Aktor in Betracht. Einzelne Teilnehmerstationen können auch als Kombinationsmodule beispielsweise bestehend aus Drehzahlsensor oder aus Stellantrieb als Sperrluftsensor und Sperrluftventil ausgebildet sein.

Eine weitere Besonderheit der Erfindung besteht darin, dass auch der Bearbeitungskopf 12 eine Mehrzahl von kopfseitigen Funktionsmodulen 34', 34", 34"' sowie ein einen Bestandteil eines Kopfbus 36 bildendes Leitungssystem aufweist. Die kopfseitigen Funktionsmodule 34', 34", 34'" sind dabei unter Bildung von Teilnehmerstationen an den Kopfbus 36 angeschlossen, wobei der Kopfbus 36 an der Trennstelle 14 mit dem Spindelbus 30 oder einer eigens hierfür vorgesehenen Verbindungsleitung 37 kommuniziert. Ohne auf den speziellen Aufbau des Bearbeitungskopfes 12 näher einzugehen, kann der Bearbeitungskopf 12 mindestens ein Funktionsmodul 34', 34", 34'" aus der Gruppe Linear- oder Drehschieber, Stellantrieb, Antriebsmotor, Drehgeber, Positionssensor, Dosierer, Heizelement aufweisen. Weiter können die Funktionsmodule 34', 34", 34'" des Bearbeitungskopfes 12 mit einem Werkzeug 24 aus der Gruppe Schneidwerkzeug, Bohrwerkzeug, Fräswerkzeug, Reibwerkzeug, Schweißwerkzeug, Lötwerkzeug, Härtungswerkzeug, Beschichtungswerkzeug, Beschriftungswerkzeug, Reinigungswerkzeug, Messwerkzeug ausgestattet sein. Die vorstehenden Aufzählungen der Funktionsmodule sind beispielhaft und daher nicht vollständig.

Bei dem in Fig. 1 gezeigten Ausführungsbeispiel ist angedeutet, dass der Spindelbus 30 und der Kopfbus 36 über die berührungslose Drehübertragungsstrecke 16 zwischen dem spindelfesten Rotor 20 und dem gestellfesten Stator 18 drahtlos über einen zusätzlichen Feldbusadapter 38 mit dem Feldbus 32 der zentralen Maschinensteuerung 22 verbunden sind.

Die Maschinensteuerung 22 umfasst bei dem Ausführungsbeispiel nach Fig. 2 eine NC-Steuerung 43 mit einem PLC-Interface 40, 40' und einem Achseninterface 42, 42', die Ausgangsdaten über ein analoges NCA-Steuergerät 44 und einen Modulator 46, der die Daten auf ein Trägersignal aufmoduliert und über die Datenübertragungsstrecke 16 zwischen Stator 18 und Rotor 20 berührungslos zur Übertragung bringt. Zur Anpassung der Protokolle zwischen unterschiedlichen Bussystemen ist sowohl in der Spindel 10 als auch im Bearbeitungskopf 12 ein Protokollkonverter 48, 50 angeordnet.

Wie aus Fig. 2 außerdem zu ersehen ist, kann die digitale NC-Steuerung über einen standardisierten Feldbus 32 und einen Feldbuskoppler 52 auch unmittelbar über die Leitung 54 mit dem Modulator 46 der Drehübertragungsstrecke 16 kommunizieren. Als Spindelbus 30 und als Kopfbus 36 werden vorteilhafterweise standardisierte Feldbussysteme, wie z. B. ein CAN-Bus eingesetzt, so dass ohne großen Aufwand Werkzeugköpfe unterschiedlicher Hersteller angeschlossen werden können.

Zusammenfassend ist folgendes festzuhalten: Die Erfindung bezieht sich auf eine Werkzeugmaschine mit einem Maschinengestell, mit einer am Maschinengestell drehbar angeordneten, motorisch angetriebenen Maschinenspindel 10 und mit mindestens einem an der Maschinenspindel 10 einwechselbaren Bearbeitungskopf 12. Der Bearbeitungskopf 12 weist ein mit einer Aufnahme der Maschinenspindel 10 kompatibles Kupplungselement auf. Weiter ist ein Drehübertrager 16 für die Datenübertragung zwischen einem gestellfesten Stator 18 und einem spindelfesten Rotor 20 vorgesehen. Eine Besonderheit der Erfindung besteht darin, dass die Maschinenspindel 10 eine Mehrzahl von spindelseitigen Funktionsmodulen 28', 28", 28"' sowie ein einen Bestandteil eines Spindelbus 30 bildendes Leitungssystem aufweist, an das die spindelseitigen Funktionsmodule 28', 28", 28"' unter Bildung von Teilnehmerstationen des Spindelbus 30 angeschlossen sind und wobei der Spindelbus 30 über die Drehübertragungsstrecke 16 mit einem gestellfesten Feldbus 32 kommuniziert. Vorteilhafterweise weist auch der Bearbeitungskopf 12 eine Mehrzahl von kopfseitigen Funktionsmodulen 34', 34", 34'" sowie ein einen Bestandteil eines Kopfbus 36 bildendes Leitungssystem auf, an das die kopfseitigen Funktionsmodule unter Bildung von Teilnehmerstationen angeschlossen sind und wobei der Kopfbus 36 über eine Trennstelle 14 mit dem Spindelbus 30 kommuniziert.

### Bezugszeichenliste

- 10: Maschinenspindel
- 12: Bearbeitungskopf
- 14: Trennstelle
- 16: Drehübertrager
- 18: Stator
- 20: Rotor
- 22: Maschinensteuerung
- 24: Bearbeitungswerkzeug
- 26: Planschieber
- 28', 28", 28"': spindelseitige Funktionsmodule
- 30: Spindelbus
- 32: gestellfester Feldbus
- 34', 34", 34"': kopfseitige Funktionsmodule
- 36: Kopfbus
- 37: Verbindungsleitung
- 38: Feldbusadapter
- 40, 40': PLC-Interface
- 42, 42': Achseninterface
- 43: NC-Steuerung
- 44: NCA-Steuergerät
- 46: Modulator
- 48: Protokollkonverter
- 50: Protokollkonverter
- 52: Feldbuskoppler
- 54: Leitung

## Patentansprüche

1. Werkzeugmaschine mit einem Maschinengestell, mit einer am Maschinengestell drehbar angeordneten, motorisch angetriebenen Maschinenspindel (10), mit mindestens einem an der Maschinenspindel (10) einwechselbaren Bearbeitungskopf (12), der ein mit einer Aufnahme der Maschinenspindel (10) kompatibles Kupplungselement aufweist, und mit einem Drehübertrager (16) für die Datenübertragung zwischen einem gestellfesten Stator (18) und einem spindelfesten Rotor (20), **dadurch gekennzeichnet, dass** die Maschinenspindel (10) eine Mehrzahl von spindelseitigen Funktionsmodulen (28', 28", 28"') sowie ein einen Bestandteil eines Spindelbus (30) bildendes Leitungssystem aufweist, an das die spindelseitigen Funktionsmodule (28', 28", 28"') unter Bildung von Teilnehmerstationen des Spindelbus (30) angeschlossen sind, und dass der Spindelbus (30) über die Drehübertragungsstrecke (16) mit einem gestellfesten Feldbus (32) kommuniziert.

2. Werkzeugmaschine nach Anspruch 1, **dadurch gekennzeichnet, dass** der Spindelbus (30) einen mit dem gestellfesten Feldbus (32) vorzugsweise über einen Feldbusadapter (38) kommunizierenden rotorfesten Protokollkonverter (48) aufweist.

3. Werkzeugmaschine nach Anspruch 1 oder 2, **dadurch gekennzeichnet, dass** die Maschinenspindel (10) mindestens ein spindelseitiges Funktonsmodul (28', 28", 28"') aus der Gruppe Temperatursensor, Schwingungssensor, Kraftsensor, Drucksensor, Feuchtigkeitssensor, Sperrluftsensor, Schmierzustandssensor, Drehzahlsensor, Beschleunigungssensor, Relativbeschleunigungssensor als Messglied und/oder aus der Gruppe Sperrluftventil, Stellantrieb, pneumatisches oder hydraulisches Magnetventil, Schmiermitteldosierer, Kühlmitteldosierer, Spindelmotor als Aktor aufweist.

4. Werkzeugmaschine nach einem der Ansprüche 1 bis 3, **dadurch gekennzeichnet, dass** der Bearbeitungskopf (12) eine Mehrzahl von kopfseitigen Funktionsmodulen (34', 34", 34"') sowie ein einen Kopfbus (36) bildendes Leitungssystem aufweist, an das die kopfseitigen Funktionsmodule (34', 34", 34"') unter Bildung von Teilnehmern des Kopfbus (36) angeschlossen sind, wobei der Kopfbus (36) über eine Trennstelle (14) mit dem Spindelbus (30) kommuniziert.

5. Werkzeugmaschine nach Anspruch 4, **dadurch gekennzeichnet, dass** der Kopfbus (36) an der Trennstelle (14) galvanisch an den Spindelbus (30) angeschlossen ist oder über einen Protokollkonverter (50) mit diesem kommuniziert.

6. Werkzeugmaschine nach Anspruch 4 oder 5, **dadurch gekennzeichnet, dass** der Bearbeitungskopf (12) mindestens ein kopfseitiges Funktionsmodul (34', 34", 34"') aus der Gruppe Linear- oder Drehschieber, Stellantrieb, Antriebsmotor, Drehgeber, Positionssensor, Dosierer, Heizelement aufweist.

7. Werkzeugmaschine nach einem der Ansprüche 4 bis 6, **dadurch gekennzeichnet, dass** der Bearbeitungskopf (12) mindestens ein kopfseitiges Funktionsmodul (34', 34", 34"') mit einem Werkzeug aus der Gruppe Schneidwerkzeug, Bohrwerkzeug, Fräswerkzeug, Reibwerkzeug, Schweißwerkzeug, Lötwerkzeug, Härtungswerkzeug, Beschichtungswerkzeug, Beschriftungswerkzeug, Reinigungswerkzeug, Messwerkzeug, Kamera aufweist.

8. Werkzeugmaschine nach einem der Ansprüche 1 bis 7, **dadurch gekennzeichnet, dass** der Spindelbus (30) und/oder der Kopfbus (36) als standardisierter Feldbus, vorzugsweise als CAN-Bus oder LIN-Bus ausgebildet ist.

9. Werkzeugmaschine nach einem der Ansprüche 1 bis 8, **dadurch gekennzeichnet, dass** die Drehübertragungsstrecke (16) an dem vom Bearbeitungskopf (12) abgewandten Ende der Maschinenspindel (10) angeordnet ist.

10. Werkzeugmaschine nach einem der Ansprüche 1 bis 9, **dadurch gekennzeichnet, dass** der Bearbeitungskopf (12) einen motorisch antreibbaren Schieber zur Aufnahme eines Werkzeugs sowie ein geregeltes Positionierungssystem für den Schieber aufweist.

11. Werkzeugmaschine nach einem der Ansprüche 1 bis 10, **dadurch gekennzeichnet, dass** die Drehübertragungsstrecke (16) eine Sende- und Empfangseinheit für die berührungslose bidirektionale Datenübertragung aufweist.

12. Werkzeugmaschine nach einem der Ansprüche 1 bis 11, **dadurch gekennzeichnet, dass** die Drehübertragungsstrecke (16) zusätzlich eine Sende- und Empfangseinheit für die berührungslose und/oder galvanische Energieübertragung aufweist.

## Claims

1. A machine tool having a machine frame, having a motor-driven machine spindle (10) which is arranged in a rotatable manner on the machine frame, having at least one machining head (12) which can be exchanged on the machine spindle (10) and has a coupling element that is compatible with a receptacle on the machine spindle (10), and having a rotary transmitter (16) for transmitting data between a stator (18) which is fixed to the frame and a rotor (20) which is fixed to the spindle, **characterized in that** the machine spindle (10) has a plurality of spindle-side functional modules (28', 28" , 28''') and also a cable system which forms a constituent part of a spindle bus (30) and to which the spindle-side functional modules (28', 28" , 28"') are connected, forming subscriber stations of the spindle bus (30), and **in that** the spindle bus (30) communicates via the rotary transmission path (16) with a field bus (32) which is fixed to the frame.

2. The machine tool as claimed in claim 1, **characterized in that** the spindle bus (30) has a protocol converter (48) which is fixed to the rotor and communicates, preferably via a field bus adapter (38), with the field bus (32) which is fixed to the frame.

3. The machine tool as claimed in claim 1 or 2, **characterized in that** the machine spindle (10) has at least one spindle-side functional module (28', 28'', 28''') from the group of temperature sensor, vibration sensor, force sensor, pressure sensor, moisture sensor, purging air sensor, lubrication condition sensor, rotational speed sensor, acceleration sensor, relative acceleration sensor as measuring element and/or from the group of purging air valve, actuating drive, pneumatic or hydraulic solenoid valve, lubricant dispenser, coolant dispenser, spindle motor as actuator.

4. The machine tool as claimed in one of claims 1 to 3, **characterized in that** the machining head (12) has a plurality of head-side functional modules (34', 34'', 34''') and also a cable system which forms a head bus (36) and to which the head-side functional modules (34', 34'', 34''') are connected, forming subscribers of the head bus (36), wherein the head bus (36) communicates with the spindle bus (30) via a disconnection point (14).

5. The machine tool as claimed in claim 4, **characterized in that** the head bus (36) is galvanically connected at the disconnection point (14) to the spindle bus (30) or communicates with the latter via a protocol converter (50).

6. The machine tool as claimed in claim 4 or 5, **characterized in that** the machining head (12) has at least one head-side functional module (34', 34'', 34''') from the group of linear or rotary slide, actuating drive, drive motor, rotary transducer, position sensor, dispenser, heating element.

7. The machine tool as claimed in one of claims 4 to 6, **characterized in that** the machining head (12) has at least one head-side functional module (34', 34'', 34''') having a tool from the group of cutting tool, drilling tool, milling tool, reaming tool, welding tool, soldering tool, hardening tool, coating tool, lettering tool, cleaning tool, measuring tool, camera.

8. The machine tool as claimed in one of claims 1 to 7, **characterized in that** the spindle bus (30) and/or the head bus (36) is/are in the form of a standardized field bus, preferably of a CAN bus or LIN bus.

9. The machine tool as claimed in one of claims 1 to 8, **characterized in that** the rotary transmission path (16) is arranged at that end of the machine spindle (10) that is remote from the machining head (12).

10. The machine tool as claimed in one of claims 1 to 9, **characterized in that** the machining head (12) has a motor-drivable slide for receiving a tool and a regulated positioning system for the slide.

11. The machine tool as claimed in one of claims 1 to 10, **characterized in that** the rotary transmission path (16) has a transceiver unit for contactless bidirectional data transmission.

12. The machine tool as claimed in one of claims 1 to 11, **characterized in that** the rotary transmission path (16) additionally has a transceiver unit for contactless and/or galvanic transmission of energy.

## Revendications

1. Machine-outil dotée d'un bâti de machine, d'une broche (10) entraînée par un moteur, disposée de manière rotative sur le bâti de machine, d'au moins une tête d'usinage (12) remplaçable sur la broche (10), qui présente un élément de couplage compatible avec un logement de la broche (10) de la machine, et d'un transmetteur rotatif (16) pour la transmission de données entre un stator (18) solidaire du bâti et un rotor (20) solidaire de la broche, **caractérisée en ce que** la broche (10) présente une pluralité de modules fonctionnels côté broche (28', 28", 28"') ainsi qu'un système de lignes formant une partie d'un bus de broche (30), auquel sont connectés les modules fonctionnels côté broche (28', 28", 28"') pour former des postes d'abonné du bus de broche (30), et que le bus de broche (30) communique avec un bus de terrain (32) solidaire du bâti par la voie de transmission rotative (16).

2. Machine-outil selon la revendication 1, **caractérisée en ce que** le bus de broche (30) présente un convertisseur de protocole (48) solidaire du rotor, qui communique avec le bus de terrain (32) solidaire du bâti de préférence par l'intermédiaire d'un adaptateur de bus de terrain (38).

3. Machine-outil selon la revendication 1 ou 2, **caractérisée en ce que** la broche (10) présente au moins un module fonctionnel côté broche (28', 28", 28"') appartenant au groupe comprenant : capteur de température, capteur de vibrations, capteur de force, capteur de pression, capteur d'humidité, capteur d'air de barrage, capteur d'état de lubrification, capteur de vitesse de rotation, capteur d'accélération, capteur d'accélération relative en tant qu'organe de mesure et/ou au groupe comprenant : vanne d'air de barrage, servomoteur, électrovanne pneumatique ou hydraulique, doseur de lubrifiant, doseur de liquide de refroidissement, moteur de broche en tant qu'actionneur.

4. Machine-outil selon l'une des revendications 1 à 3, **caractérisée en ce que** la tête d'usinage (12) présente une pluralité de modules fonctionnels côté tête (34', 34", 34"') ainsi qu'un système de lignes formant un bus de tête (36), auquel sont connectés les modules fonctionnels côté tête (34', 34", 34"') pour former des abonnés du bus de tête (36), le bus de tête (36) communiquant avec le bus de broche (30) via une interface (14).

5. Machine-outil selon la revendication 4, **caractérisée en ce que** le bus de tête (36) est connecté électriquement au bus de broche (30) à l'interface (14) ou communique avec celui-ci par l'intermédiaire d'un convertisseur de protocole (50).

6. Machine-outil selon la revendication 4 ou 5, **caractérisée en ce que** la tête d'usinage (12) présente au moins un module fonctionnel côté tête (34', 34", 34"') appartenant au groupe comprenant : coulisseau linéaire ou rotatif, servomoteur, moteur d'entraînement, encodeur, capteur de position, doseur, élément chauffant.

7. Machine-outil selon l'une des revendications 4 à 6, **caractérisée en ce que** la tête d'usinage (12) présente au moins un module fonctionnel côté tête (34', 34", 34"') avec un outil appartenant au groupe comprenant : outil de coupe, outil de forage, outil de fraisage, outil d'alésage, outil de soudage, outil de brasage, outil de durcissement, outil de revêtement, outil de marquage, outil de nettoyage, outil de mesure, caméra.

8. Machine-outil selon l'une des revendications 1 à 7, **caractérisée en ce que** le bus de broche (30) et/ou le bus de tête (36) sont réalisés sous forme de bus de terrain standardisé, de préférence de bus CAN ou de bus LIN.

9. Machine-outil selon l'une des revendications 1 à 8, **caractérisée en ce que** la voie de transmission rotative (16) est disposée à l'extrémité de la broche (10) éloignée de la tête d'usinage (12).

10. Machine-outil selon l'une des revendications 1 à 9, **caractérisée en ce que** la tête d'usinage (12) présente un coulisseau entraînable par un moteur pour loger un outil ainsi qu'un système de positionnement régulé pour le coulisseau.

11. Machine-outil selon l'une des revendications 1 à 10, **caractérisée en ce que** la voie de transmission rotative (16) présente une unité d'émission et de réception pour la transmission de données bidirectionnelle sans contact.

12. Machine-outil selon l'une des revendications 1 à 11, **caractérisée en ce que** la voie de transmission rotative (16) présente en outre une unité d'émission et de réception pour la transmission d'énergie sans contact et/ou galvanique.
